# EUROPEAN PATENT SPECIFICATION

(11) **EP 3 594 019 B1**
(45) Date of publication and mention of the grant of the patent: **21.04.2021**
(21) Application number: 19185463.7
(22) Date of filing: 10.07.2019
(51) Int. Cl.: B60C 9/18, B60C 13/00, B60C 11/04, B60C 15/00

(54) **HEAVY DUTY PNEUMATIC TIRE**
SCHWERLASTLUFTREIFEN
PNEU POUR FONCTIONNEMENT INTENSIF

(30) Priority: 13.07.2018 JP 2018133470
(43) Date of publication of application: 15.01.2020
(73) Proprietor: Sumitomo Rubber Industries, Ltd., Kobe-shi, Hyogo-ken 651-0072 (JP)
(72) Inventor: KAGIMOTO, Shuji, Kobi-shi, Hyogo 651-0072 (JP)
(74) Representative: Manitz Finsterwald Patent- und Rechtsanwaltspartnerschaft mbB

(56) References cited:
- EP-A1- 3 482 977
- WO-A1-2008/035646
- JP-A- H06 171 309
- JP-A- 2007 137 384

## Description

### BACKGROUND OF THE INVENTION

### Field of the Invention

The present invention relates to heavy duty pneumatic tires.

### Description of the Related Art

In the bead portion of a tire, ends of members such as a carcass ply are present. When the bead portion is moved, strain concentrates on the ends, which could cause damage. A large load acts on a tire mounted on a vehicle such as a truck or a bus, i.e., a heavy duty pneumatic tire. For such a tire, from the viewpoint of improvement of durability, reinforcing the bead portion to suppress the movement thereof is considered (for example, Japanese Laid-Open Patent Publication No. H06-219111).

Japanese Laid-Open Patent Publication No. H06-219111 discusses a technology in which the sidewalls at turned-up ends of a carcass ply are controlled so as to have a predetermined thickness, for example.

EP 3 482 977 A1, which has been published after the date of priority of the present application, discloses a heavy duty pneumatic tire comprising a tread portion, side wall portions, a carcass, a belt layer, bead portions and cushion rubbers disposed between a main portion of the carcass and each edge of the belt layer. A radially outer end of the bead apex rubber is located radially outwardly of the inner end of the sheeted rubber layer. The radial distance between the inner end of the cushion rubber and the outer end of the bead apex rubber is in a range of 25 % to 35 % of the section height.

Heavy duty pneumatic tires having a bead and a carcass ply are also disclosed in WO 2008/035646 A1, JP 2007 137384 A and JP H06 171309 A.

The bead of the tire includes a core and an apex extending outward in the radial direction from the core. If an apex having a height is employed, the bead portion has high rigidity. Since the movement of the bead can be suppressed, durability is likely to be improved.

In the radial direction of the tire, the region from the inner end of a cushion layer provided between an end of a belt and a carcass to the outer end of an apex is also referred to as a flexible zone. The flexible zone is soft and contributes to bending of the tire.

In a tire having an aspect ratio of not greater than 75%, the length of the side portion is short. Therefore, if an apex having a height is employed, the flexible zone is narrowed. In this case, since the side portion has a high rigidity, there is a concern that ease of mounting of the tire on a rim, i.e., rim mountability, is reduced.

The present invention has been made in view of such a situation. An object of the present invention is to provide a heavy duty pneumatic tire in which rim mountability and bead durability are adjusted in a well-balanced manner.

### SUMMARY OF THE INVENTION

A heavy duty pneumatic tire according to an aspect of the present invention is a heavy duty pneumatic tire having an aspect ratio of not greater than 75%. The heavy duty pneumatic tire includes: a tread configured to, at a tread surface thereof, come into contact with a road surface; a pair of sidewalls each extending inward in a radial direction from an end of the tread; a pair of beads located radially inward of the sidewalls; a carcass extending from one bead to the other bead, at an inner side of the tread and the pair of sidewalls; a belt located between the tread and the carcass; and a pair of cushion layers each located between an end of the belt and the carcass. Each bead includes a core and an apex located radially outward of the core. In the radial direction, a zone from an inner end of each cushion layer to an outer end of the apex corresponding thereto is a flexible zone, and a ratio of a length in the radial direction of the flexible zone to a cross-sectional height of the carcass is not less than 0.25 and not greater than 0.4.

In the heavy duty pneumatic tire, the carcass includes at least one carcass ply. The carcass ply includes: a body portion which extends between one core and the other core; and a pair of turned-up portions which are connected with the body portion and are turned up around the cores from an inner side toward an outer side in an axial direction. The body portion in the flexible zone has a shape represented by an arc.

In the heavy duty pneumatic tire, a ratio of a radius of the arc representing the shape of the body portion in the flexible zone to the cross-sectional height of the carcass is not less than 0.3 and not greater than 0.4.

Preferably, in the heavy duty pneumatic tire, a distance in the radial direction from a bead base line to an end of each turned-up portion is not less than 20 mm and not greater than 40 mm.

Preferably, in the heavy duty pneumatic tire, a ratio of a distance in the radial direction from a bead base line to an outer end of each apex to the cross-sectional height of the carcass is not less than 0.3 and not greater than 0.5.

Preferably, in the heavy duty pneumatic tire, the tread is provided with at least three circumferential grooves aligned with each other in the axial direction, and among the circumferential grooves, a circumferential groove that is located at the outer side in the axial direction is a shoulder circumferential groove. When an intersection between a reference line that passes an axially outer edge of the shoulder circumferential groove and that extends in the radial direction and an inner surface of the body portion is defined as a reference point of a portion immediately below the shoulder circumferential groove, the body portion from the reference point of the portion immediately below the shoulder circumferential groove to the outer end of the apex has a shape represented by an arc.

Preferably, in the heavy duty pneumatic tire, a length from an end of the tread surface to the axially outer edge of the shoulder circumferential groove is not less than 10% and not greater than 25% of a length from one end of the tread surface to the other end of the tread surface.

According to present invention, a heavy duty pneumatic tire in which rim mountability and bead durability are adjusted in a well-balanced manner is obtained.

### BRIEF DESCRIPTION OF THE DRAWINGS

FIG. 1 is a cross-sectional view showing a part of a heavy duty pneumatic tire according to an embodiment of the present invention.
FIG. 2 is a cross-sectional view showing a side portion of the tire shown in FIG. 1.

### DETAILED DESCRIPTION OF THE EMBODIMENTS

The following will describe in detail the present invention based on preferred embodiments with appropriate reference to the drawings.

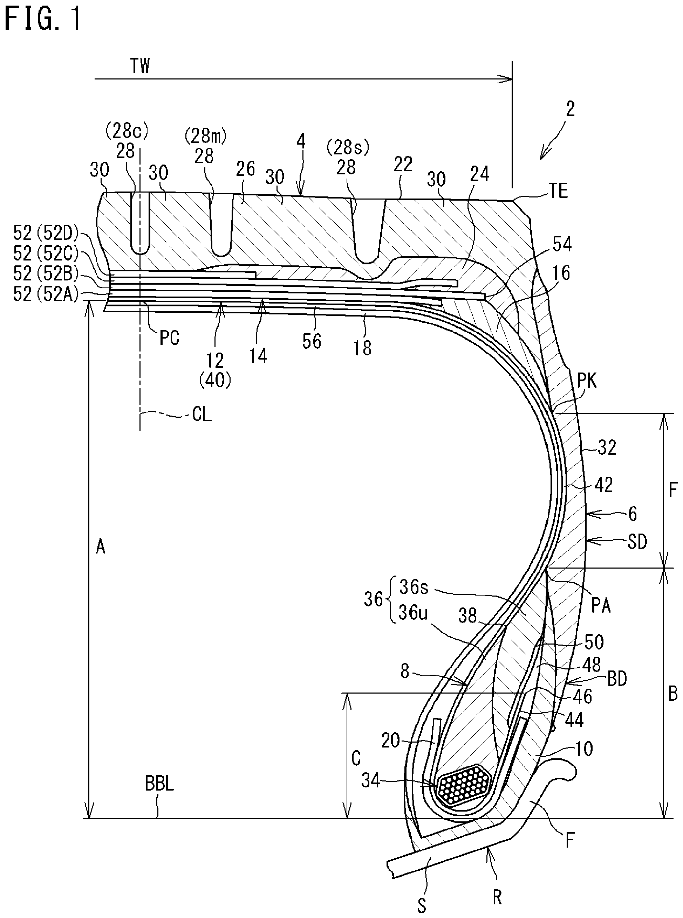

FIG. 1 shows a part of a heavy duty pneumatic tire 2 (hereinafter simply referred to as "tire 2") according to an embodiment of the present invention. The tire 2 is mounted to a heavy duty vehicle, such as a truck or a bus, for example.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, the tire 2 is mounted on a rim R. The rim R is a normal rim. The interior of the tire 2 is filled with air, and the internal pressure of the tire 2 is adjusted to a normal internal pressure. No load is applied to the tire 2.

In the present invention, a state where the tire 2 is mounted on a rim R (normal rim), the internal pressure of the tire 2 is adjusted to a normal internal pressure, and no load is applied to the tire 2 is referred to as normal state. In the present invention, unless otherwise specified, the dimensions and angles of the tire 2 and each component of the tire 2 are measured in the normal state.

In the present specification, the normal rim means a rim specified in a standard on which the tire 2 is based. The "standard rim" in the JATMA standard, the "Design Rim" in the TRA standard, and the "Measuring Rim" in the ETRTO standard are normal rims.

In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

In the present specification, a normal load means a load specified in the standard on which the tire 2 is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In FIG. 1, a solid line BBL extending in the axial direction is a bead base line. The bead base line BBL is a line that defines the rim diameter (see JATMA or the like) of the rim R (normal rim).

The tire 2 includes a tread 4, a pair of sidewalls 6, a pair of beads 8, a pair of chafers 10, a carcass 12, a belt 14, cushion layers 16, an inner liner 18, and a pair of steel reinforcing layers 20.

The outer surface of the tread 4 comes into contact with a road surface. The outer surface of the tread 4 is a tread surface 22. In the tire 2, the tread 4 includes a base portion 24 and a cap portion 26 located radially outward of the base portion 24. The base portion 24 is formed from a crosslinked rubber for which adhesion is taken into consideration. The cap portion 26 is formed from a crosslinked rubber for which abrasion resistance and grip performance are taken into consideration.

In the tire 2, at least three circumferential grooves 28 are formed in the tread 4. In the tire 2 shown in FIG. 1, five circumferential grooves 28 are formed in the tread 4. Accordingly, six land portions 30 are formed in the tread 4. These circumferential grooves 28 are aligned with each other in the axial direction, and extend continuously in the circumferential direction. Among these circumferential grooves 28, a circumferential groove 28c located on the equator plane CL is a center circumferential groove 28c. A circumferential groove 28s located at the outer side in the axial direction is a shoulder circumferential groove 28s. A circumferential groove 28m located between the center circumferential groove 28c and the shoulder circumferential groove 28s is a middle circumferential groove 28m.

In the tire 2, from the viewpoint of contribution to drainage performance and traction performance, the width of each circumferential groove 28 is set in a range of not less than 1% and not greater than 10% of a tread width TW which is represented by the length from one end TE to the other end TE of the tread surface 22. The depth of the circumferential groove 28 is set in a range of not less than 10 mm and not greater than 25 mm. The tread width TW and the width of the circumferential groove 28 are measured along the tread surface 22.

Each sidewall 6 is connected with a corresponding end of the tread 4. The sidewall 6 extends inward in the radial direction from the end of the tread 4. The outer surface of the sidewall 6 is a part of a side surface 32 of the tire 2. The sidewall 6 is formed from a crosslinked rubber.

Each bead 8 is located radially inward of a corresponding sidewall 6. The bead 8 includes a core 34 and an apex 36. The core 34 extends in the circumferential direction. The core 34 includes a steel wire. In the tire 2, the core 34 has a substantially-hexagonal cross-sectional shape. The core 34 may be formed so as to have a substantially-rectangular cross-sectional shape. The apex 36 is located radially outward of the core 34. The apex 36 extends outward in the radial direction from the core 34. In FIG. 1, the reference character PA represents the outer end of the apex 36.

The apex 36 includes an inner apex 36u and an outer apex 36s. The inner apex 36u is located radially outward of the core 34. The outer apex 36s is located radially outward of the inner apex 36u.

The inner apex 36u extends outward in the radial direction from the core 34. In the cross-section of the tire 2 shown in FIG. 1, the inner apex 36u is tapered outward in the radial direction.

The inner apex 36u is formed from a crosslinked rubber. The inner apex 36u is harder than the outer apex 36s. The inner apex 36u contributes to rigidity of a portion BD of the bead 8 (hereinafter, bead portion BD).

The outer apex 36s extends outward in the radial direction from the inner apex 36u. In the tire 2, the outer apex 36s has a large thickness in the vicinity of an outer end 38 of the inner apex 36u. In the cross-section of the tire 2 shown in FIG. 1, the outer apex 36s is tapered inward in the radial direction, and is tapered outward in the radial direction.

The outer apex 36s is formed from a crosslinked rubber. The outer apex 36s is softer than the inner apex 36u. The outer apex 36s contributes to flexible deformation of the bead portion BD.

Each chafer 10 is located axially outward of a corresponding bead 8. The chafer 10 is located radially inward of the sidewall 6. The chafer 10 is in contact with a sheet S and a flange F of the rim R. The chafer 10 is formed from a crosslinked rubber for which abrasion resistance is taken into consideration.

The carcass 12 extends from one bead 8 to the other bead 8, at the inner side of the tread 4, the sidewall 6, and the chafer 10. The carcass 12 includes at least one carcass ply 40. The carcass 12 of this tire 2 is composed of one carcass ply 40. Although not shown, the carcass ply 40 includes multiple carcass cords aligned with each other. These carcass cords are covered with a topping rubber.

Each carcass cord intersects the equator plane CL. In the tire 2, the angle of the carcass cord relative to the equator plane CL is not less than 70° and not greater than 90°. The carcass 12 of the tire 2 has a radial structure. In the tire 2, the material of the carcass cord is steel. A cord formed from organic fiber may be used as the carcass cord.

In the tire 2, the carcass ply 40 is turned up around each core 34 from the inner side toward the outer side in the axial direction. The carcass ply 40 includes: a body portion 42 which extends between one core 34 and the other core 34; and a pair of turned-up portions 44 which are connected with the body portion 42 and are turned up around the cores 34 from the inner side toward the outer side in the axial direction. In the tire 2, an end 46 of each turned-up portion 44 is located radially inward of the outer end PA of a corresponding apex 36. The end 46 of the turned-up portion 44 is interposed between a mid layer 48 and a strip 50.

In FIG. 1, the reference character PC represents the position where the distance in the radial direction from the bead base line BBL to the inner surface of the carcass 12 is maximum. In the tire 2, the position PC is located on the equator plane CL. In FIG. 1, a double-headed arrow A represents the distance in the radial direction from the bead base line BBL to the position PC. In the present invention, the distance A in the radial direction is the cross-sectional height of the carcass 12.

The belt 14 is located between the tread 4 and the carcass 12. The belt 14 is located radially outward of the carcass 12. In the tire 2, the tread 4 is layered on the belt 14.

In the tire 2, the belt 14 includes four belt plies 52. In the tire 2, the number of belt plies 52 constituting the belt 14 is not limited in particular. The configuration of the belt 14 is determined as appropriate in consideration of the specification of the tire 2.

Although not shown, each belt ply 52 includes multiple belt cords aligned with each other. These belt cords are covered with a topping rubber. Each belt cord is inclined with respect to the equator plane CL. In the tire 2, as for a belt ply 52A located at the innermost side in the radial direction, the angle of the belt cord relative to the equator plane CL is set in a range of not less than 50° and not greater than 70°. As for a belt ply 52B, a belt ply 52C, and a belt ply 52D, which are located radially outward of the belt ply 52A, the angle of the belt cord relative to the equator plane CL is set in a range of not less than 15° and not greater than 35°.

In the tire 2, among the four belt plies 52, the belt ply 52B located between the belt ply 52A and the belt ply 52C has the maximum width in the axial direction. The belt ply 52D located at the outermost side in the radial direction has the minimum width in the axial direction. In the tire 2, the material of the belt cord is steel. A cord formed from organic fiber may be used as the belt cord.

Each cushion layer 16 is located between the belt 14 and the carcass 12, in a portion corresponding to an end 54 of the belt 14. In other words, the cushion layer 16 is located between the end 54 of the belt 14 and the carcass 12. The cushion layer 16 is formed from a crosslinked rubber.

As shown in FIG. 1, in the tire 2, the cushion layer 16 has the maximum thickness at the end 54 of the belt 14, specifically, at the end 54 of the belt ply 52B. The cushion layer 16 is tapered inward in the axial direction from the portion of the maximum thickness. The cushion layer 16 is tapered inward in the radial direction from the portion of the maximum thickness.

The inner liner 18 is located inward of the carcass 12. In the tire 2, the inner liner 18 is joined to the carcass 12 by an insulation 56. The inner liner 18 forms the inner surface of the tire 2. The inner liner 18 is formed from a crosslinked rubber that has an excellent air blocking property. The inner liner 18 maintains the internal pressure of the tire 2.

Each steel reinforcing layer 20 is located in a corresponding bead portion BD. The steel reinforcing layer 20 is turned up along the carcass ply 40, from the inner side toward the outer side in the axial direction around the core 34. At least a part of the steel reinforcing layer 20 is in contact with the carcass ply 40. The carcass ply 40 is located between the steel reinforcing layer 20 and the bead 8. Although not shown, the steel reinforcing layer 20 includes multiple steel cords aligned with each other. These steel cords are covered with a topping rubber. The steel reinforcing layer 20 contributes to improvement of flexural rigidity of the bead portion BD.

In FIG. 1, the reference character PK represents the radially inner end of the cushion layer 16. In the tire 2, in the radial direction, the zone from the inner end PK of the cushion layer 16 to the outer end PA of the apex 36 is a flexible zone. A double-headed arrow F represents the length in the radial direction of the flexible zone.

As shown in FIG. 1, the cushion layer 16 and the apex 36 do not exist in the flexible zone. The rigidity of the flexible zone is lower than the rigidity of the portion at the radially outer side thereof. The rigidity of the flexible zone is lower than the rigidity of the portion at the radially inner side thereof.

The aspect ratio of the tire 2 is represented by the ratio of the cross-sectional height (see JATMA and the like) to the cross-sectional width of the tire 2 (see JATMA and the like), which are obtained in a normal state. In the tire 2, the aspect ratio is not greater than 75%. In the tire 2, compared with a tire having an aspect ratio exceeding 75%, the length of the portion from the sidewall 6 to the chafer 10, i.e., a side portion SD, is limited. In the tire 2 having an aspect ratio of not greater than 75%, the size of the flexible zone has influence on the rigidity of the side portion SD.

In the tire 2, the ratio of a length F in the radial direction of the flexible zone to a cross-sectional height A of the carcass 12 is not less than 0.25 and not greater than 0.4. When this ratio is set to not less than 0.25, the flexible zone provides appropriate flexibility to the side portion SD. When this ratio is set to not greater than 0.4, the side portion SD is prevented from becoming excessively soft. In the tire 2, the rigidity of the side portion SD is appropriately maintained.

As described above, in the tire 2, the length F in the radial direction of the flexible zone is set in a range from 0.25 times to 0.4 times the cross-sectional height A of the carcass 12. In the tire 2, since the flexible zone is sufficiently ensured in the side portion SD, the side portion SD flexibly bends. The tire 2 can be easily mounted on the rim R.

In the tire 2, since the flexible zone is ensured, the rigidity of the bead portion BD is reduced compared with that of conventional tires. As for the tire 2, there is a concern that the bead durability is reduced.

However, in the tire 2, the flexible zone, for which the ratio of the length F in the radial direction to the cross-sectional height A of the carcass 12 is set in a predetermined range, contributes to reduction of strain caused in the bead portion BD in the tire 2 in an inflated state. Therefore, even if the rigidity of the bead portion BD is reduced, necessary bead durability is ensured in the tire 2.

The tire 2 can be easily mounted on the rim R, and has necessary bead durability. In the tire 2, rim mountability and bead durability are adjusted in a well-balanced manner.

As described above, in the tire 2, the ratio of the length F in the radial direction of the flexible zone to the cross-sectional height A of the carcass 12 is not less than 0.25 and not greater than 0.4. From the viewpoint of further adjusting the rim mountability and the bead durability in a well-balanced manner, this ratio is preferably not less than 0.28, and preferably not greater than 0.40.

In the tire 2, the shape of the body portion 42 of the carcass ply 40 in the flexible zone in a cross-section of the tire 2 along a plane including the rotation axis of the tire 2 is represented by a single arc. In other words, in the tire 2, the body portion 42 of the carcass ply 40 is configured to have a shape that is represented by an arc in the flexible zone. The body portion 42 contributes to flexible bending of the side portion SD and reduction of strain caused in the bead portion BD. The tire 2 can be easily mounted on the rim R, and has necessary bead durability. From this viewpoint, in the tire 2, the shape of the body portion 42 in the flexible zone is preferably represented by an arc.

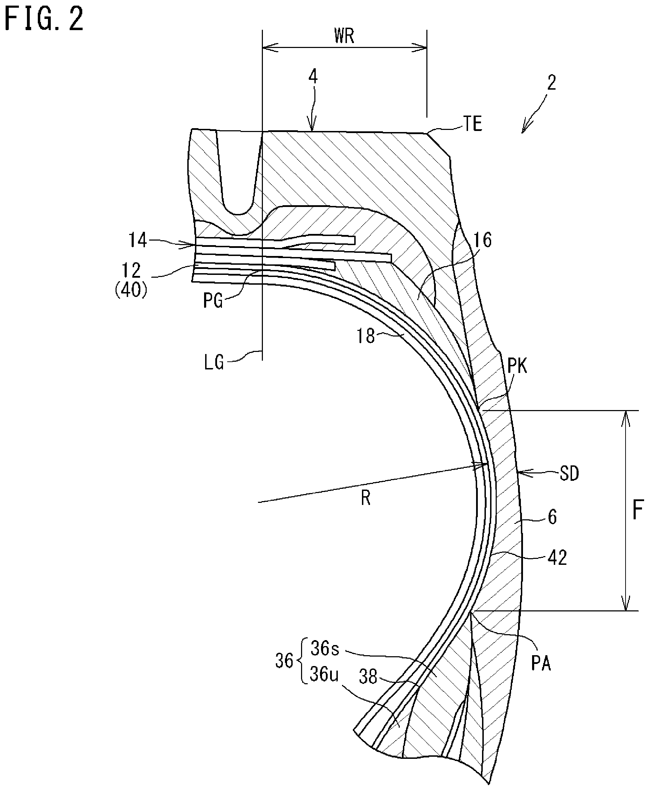

FIG. 2 shows the flexible zone of the tire 2 shown in FIG. 1. In FIG. 2, the right-left direction is the axial direction of the tire 2, and the up-down direction is the radial direction of the tire 2. The direction perpendicular to the surface of the sheet of FIG. 2 is the circumferential direction of the tire 2.

In FIG. 2, an arrow R represents the radius of the arc representing the shape of the body portion 42. The radius R is specified on the basis of the shape of the inner surface of the body portion 42.

In the tire 2, the ratio of the radius R of the arc representing the shape of the body portion 42 to the cross-sectional height A of the carcass 12 is preferably not less than 0.3 and preferably not greater than 0.4. When this ratio is set to not less than 0.3, the body portion 42 contributes to flexible bending of the side portion SD. The tire 2 can be easily mounted on the rim R. From this viewpoint, this ratio is more preferably not less than 0.31. When this ratio is set to not greater than 0.4, the body portion 42 contributes to reduction of strain caused in the bead portion BD. In the tire 2, necessary bead durability is ensured. From this viewpoint, this ratio is more preferably not greater than 0.38.

In FIG. 2, a solid line LG is a reference line that passes through the axially outer edge of the shoulder circumferential groove 28s and that extends in the radial direction. A reference character PG is the intersection between the reference line LG and the inner surface of the body portion 42. The intersection PG is a reference point of the portion immediately below the shoulder circumferential groove 28s, in the body portion 42. In the tire 2, a length WR from the end TE of the tread surface 22 to the axially outer edge of the shoulder circumferential groove 28s is normally set in a range of not less than 10% and not greater than 25% of the tread width TW. The length WR is measured along the tread surface 22.

In the tire 2, the shape of the body portion 42 from the reference point PG of the portion immediately below the shoulder circumferential groove 28s to the outer end PA of the apex 36 is represented by a single arc. In other words, in the tire 2, the body portion 42 of the carcass ply 40 is configured such that the shape thereof is represented by an arc, in the zone from the reference point PG to the outer end PA of the apex 36. In the tire 2, the body portion 42 further effectively contributes to flexible bending of the side portion SD and reduction of strain caused in the bead portion BD. In the tire 2, rim mountability and bead durability are adjusted in a well-balanced manner. From this viewpoint, more preferably, not only the shape of the body portion 42 in the flexible zone but also the shape of the body portion 42 from the reference point PG of the portion immediately below the shoulder circumferential groove 28s to the outer end PA of the apex 36 are represented by an arc.

In FIG. 1, a double-headed arrow B represents the distance in the radial direction from the bead base line BBL to the outer end PA of the apex 36. A double-headed arrow C represents the distance in the radial direction from the bead base line BBL to the end 46 of the turned-up portion 44.

In the tire 2, the ratio of the distance B in the radial direction from the bead base line BBL to the outer end PA of the apex 36 to the cross-sectional height A of the carcass 12 is preferably not less than 0.3 and preferably not greater than 0.5. When this ratio is set to not less than 0.3, the rigidity of the bead portion BD is appropriately maintained. In the tire 2, necessary bead durability is ensured. From this viewpoint, this ratio is more preferably not less than 0.38. When this ratio is set to not greater than 0.5, the flexible zone is sufficiently ensured in the side portion SD. Accordingly, the side portion SD flexibly bends. The tire 2 can be easily mounted on the rim R. From this viewpoint, this ratio is more preferably not greater than 0.50.

In the tire 2, a distance C in the radial direction from the bead base line BBL to the end 46 of the turned-up portion 44 is preferably not less than 20 mm, and preferably not greater than 40 mm. When the distance C is set to not less than 20 mm, the carcass ply 40 having a sufficient length is turned up around the core 34. Even when tension acts on this carcass ply 40, the carcass ply 40 is less likely to come off. In the tire 2, favorable durability is maintained. When the distance C is set to not greater than 40 mm, the turned-up portion 44 has an appropriate length. In the tire 2, even when the bead portion BD is moved, strain is less likely to concentrate on the end 46 of the turned-up portion 44. In the tire 2, necessary bead durability is ensured.

As is apparent from the description above, according to the present invention, the heavy duty pneumatic tire 2 in which bead durability and rim mountability are adjusted in a well-balanced manner is obtained.

The embodiment disclosed above is merely illustrative in all aspects and is not restrictive. The technical scope of the present invention is not limited to the above-described embodiment.

### EXAMPLES

The following will describe the present invention in further detail by means of examples, etc., but the present invention is not limited to these examples.

### [Example 1]

A heavy duty pneumatic tire (tire size = 245/70R19.5) having the basic structure shown in FIG. 1 and having the specifications shown in Table 1 below was obtained.

In Example 1, the aspect ratio was 70%. The cross-sectional height A of the carcass was 145 mm. The distance C in the radial direction from the bead base line to the end of the turned-up portion was 35 mm. The ratio (B/A) of the distance B in the radial direction of the turned-up portion was 35 mm. The ratio (B/A) of the distance B in the radial direction from the bead base line to the outer end of the apex to the cross-sectional height A of the carcass was 0.48. The ratio (F/A) of the length F in the radial direction of the flexible zone to the cross-sectional height A of the carcass was 0.30. The ratio (R/A) of the radius R of the arc representing the shape of the body portion in the flexible zone to the cross-sectional height A of the carcass was 0.34.

### [Comparative Examples 1 and 2]

Tires of Comparative Examples 1 and 2 were obtained in the same manner as Example 1 except that the ratio (B/A), the ratio (F/A), and the ratio (R/A) were set as shown in Table 1 below.

### [Examples 2 and 3]

Tires of Examples 2 and 3 were obtained in the same manner as Example 1 except that the ratio (B/A) and the ratio (F/A) were set as shown in Table 1 below.

### [Examples 4 to 7]

Tires of Examples 4 to 7 were obtained in the same manner as Example 1 except that the ratio (R/A) was set as shown in Table 2 below.

### [Examples 8 and 9]

Tires of Examples 8 and 9 were obtained in the same manner as Example 1 except that the distance C in the radial direction was set as shown in Table 2 below.

### [Bead durability]

Each sample tire was mounted onto a rim (size = 19.5×7.5) and inflated with air to adjust the internal pressure of the tire to 850kPa. The tire was mounted to a drum tester, and a load of 200% of a normal load was applied to the tire. Running with the tire on the drum (drum diameter = 1707 mm) at a speed of 20 km/h was performed. The running time until damage was caused in the bead portion was measured. The results are indicated by indexes in Tables 1 and 2 below. The greater the value is, the longer the running time is, which means the tire is excellent in bead durability.

### [Rim mountability]

Ease of mounting of the sample tire on the rim (size = 19.5×7.5) when the tire was mechanically mounted on the rim was evaluated. The results are indicated by indexes in Tables 1 and 2 below. The greater the value is, the more easily the tire is mounted on the rim.

### [Combined performance]

The sum of indexes obtained in the respective evaluations of bead durability and rim mountability was obtained. The results are indicated as combined performance in Tables 1 and 2 below. The greater the value is, the better the performance is.

**[Table 1]**

| | Comparative Example 1 | Example 2 | Example 1 | Example 3 | Comparative Example 2 |
|---|---|---|---|---|---|
| C [mm] | 35 | 35 | 35 | 35 | 35 |
| B/A [-] | 0.55 | 0.50 | 0.48 | 0.38 | 0.28 |
| F/A [-] | 0.23 | 0.28 | 0.30 | 0.40 | 0.50 |
| R/A [-] | 0.28 | 0.34 | 0.34 | 0.34 | 0.41 |
| Bead durability | 110 | 105 | 100 | 95 | 60 |
| Rim mountability | 60 | 95 | 100 | 105 | 110 |
| Combined | 170 | 200 | 200 | 200 | 170 |
| performance | | | | | |

**[Table 2]**

| | Example 4 | Example 5 | Example 6 | Example 7 | Example 8 | Example 9 |
|---|---|---|---|---|---|---|
| C [mm] | 35 | 35 | 35 | 35 | 15 | 45 |
| B/A [-] | 0.48 | 0.48 | 0.48 | 0.48 | 0.48 | 0.48 |
| F/A [-] | 0.30 | 0.30 | 0.30 | 0.30 | 0.30 | 0.30 |
| R/A [-] | 0.28 | 0.31 | 0.38 | 0.41 | 0.34 | 0.34 |
| Bead durability | 105 | 105 | 95 | 90 | 90 | 90 |
| Rim mountability | 90 | 95 | 105 | 105 | 100 | 100 |
| Combined performance | 195 | 200 | 200 | 195 | 190 | 190 |

As shown in Tables 1 and 2, in Examples, it is confirmed that rim mountability and bead durability are adjusted in a well-balanced manner. Examples have higher evaluation than Comparative Examples. From this evaluation result, advantages of the present invention are clear.

The technology related to the flexible zone described above can be applied to various tires.

## Claims

1. A heavy duty pneumatic tire (2) having an aspect ratio of not greater than 75%, comprising:
a tread (4) configured to, at a tread surface thereof, come into contact with a road surface;
a pair of sidewalls (6) each extending inward in a radial direction from an end of the tread (4);
a pair of beads (8) located radially inward of the sidewalls (6);
a carcass (12) extending from one bead (8) to the other bead (8), at an inner side of the tread (4) and the pair of sidewalls (6);
a belt (14) located between the tread (4) and the carcass (12); and
a pair of cushion layers (16) each located between an end (54) of the belt (14) and the carcass (12), wherein
each bead (8) includes a core (34) and an apex (36) located radially outward of the core (34),
in the radial direction, a zone from an inner end of each cushion layer (16) to an outer end of the apex (36) corresponding thereto is a flexible zone, and
a ratio of a length in the radial direction of the flexible zone to a cross-sectional height of the carcass (12) is not less than 0.25 and not greater than 0.4, wherein
the carcass (12) includes at least one carcass ply (40),
the carcass ply (40) includes: a body portion (42) which extends between one core (34) and the other core (34); and a pair of turned-up portions (44) which are connected with the body portion (42) and are turned up around the cores (34) from an inner side toward an outer side in an axial direction, and
the body portion (42) in the flexible zone has a shape represented by an arc, wherein
a ratio of a radius of the arc representing the shape of the body portion (42) in the flexible zone to the cross-sectional height of the carcass (12) is not less than 0.3 and not greater than 0.4.

2. The heavy duty pneumatic tire according to claim 1, wherein
a distance in the radial direction from a bead base line (BBL) to an end of each turned-up portion (44) is not less than 20 mm and not greater than 40 mm.

3. The heavy duty pneumatic tire according to any one of claims 1 and 2, wherein
a ratio of a distance in the radial direction from a bead base line (BBL) to an outer end of each apex (36) to the cross-sectional height of the carcass (12) is not less than 0.3 and not greater than 0.5.

4. The heavy duty pneumatic tire according to any one of claims 1 to 3, wherein
the tread (4) is provided with at least three circumferential grooves aligned with each other in the axial direction, and among the circumferential grooves, a circumferential groove that is located at the outer side in the axial direction is a shoulder circumferential groove, and
when an intersection between a reference line that passes an axially outer edge of the shoulder circumferential groove and that extends in the radial direction and an inner surface of the body portion is defined as a reference point of a portion immediately below the shoulder circumferential groove,
the body portion (42) from the reference point of the portion immediately below the shoulder circumferential groove to the outer end of the apex has a shape represented by an arc.

5. The heavy duty pneumatic tire according to claim 4, wherein
a length from an end of the tread surface to the axially outer edge of the shoulder circumferential groove is not less than 10% and not greater than 25% of a length from one end of the tread surface to the other end of the tread surface.

## Patentansprüche

1. Schwerlast-Luftreifen (2) mit einem Querschnittsverhältnis von nicht mehr als 75%, umfassend:
eine Lauffläche (4), die so konfiguriert ist, dass sie an ihrer Laufflächenoberfläche mit einer Straßenoberfläche in Kontakt kommt;
ein Paar Seitenwände (6), die sich jeweils in einer radialen Richtung von einem Ende der Lauffläche (4) nach innen erstrecken;
ein Paar Wülste (8), die radial innen von den Seitenwänden (6) angeordnet sind;
eine Karkasse (12), die sich von einem Wulst (8) zu dem anderen Wulst (8) an einer Innenseite der Lauffläche (4) und des Paars Seitenwände (6) erstreckt;
einen Gürtel (14), der sich zwischen der Lauffläche (4) und der Karkasse (12) befindet; und
ein Paar Polsterschichten (16), die jeweils zwischen einem Ende (54) des Gürtels (14) und der Karkasse (12) angeordnet sind, wobei
jeder Wulst (8) einen Kern (34) und einen Kernreiter (36) aufweist, der sich radial außen von dem Kern (34) befindet,
in der radialen Richtung eine Zone von einem inneren Ende jeder Polsterschicht (16) bis zu einem äußeren Ende des dazugehörigen Kernreiters (36) eine flexible Zone ist, und
ein Verhältnis einer Länge in der radialen Richtung der flexiblen Zone zu einer Querschnittshöhe der Karkasse (12) nicht kleiner als 0,25 und nicht größer als 0,4 ist,
die Karkasse (12) mindestens eine Karkasslage (40) umfasst,
die Karkasslage (40) einen Körperabschnitt (42), der sich zwischen einem Kern (34) und dem anderen Kern (34) erstreckt, und ein Paar Umschlagabschnitte (44) umfasst, die mit dem Körperabschnitt (42) verbunden sind und um die Kerne (34) von einer Innenseite zu einer Außenseite in einer axialen Richtung umgeschlagen sind, und
der Körperabschnitt (42) in der flexiblen Zone eine Form aufweist, die durch einen Bogen dargestellt ist, wobei
ein Verhältnis eines Radius des Bogens, der die Form des Körperabschnitts (42) in der flexiblen Zone darstellt, zur Querschnittshöhe der Karkasse (12) nicht kleiner als 0,3 und nicht größer als 0,4 ist.

2. Schwerlast-Luftreifen nach Anspruch 1, wobei ein Abstand in der radialen Richtung von einer Wulstgrundlinie (BBL) zu einem Ende jedes Umschlagabschnitts (44) nicht kleiner als 20 mm und nicht größer als 40 mm ist.

3. Schwerlast-Luftreifen nach einem der Ansprüche 1 und 2, wobei ein Verhältnis eines Abstands in der radialen Richtung von einer Wulstgrundlinie (BBL) zu einem äußeren Ende jedes Kernreiters (36) zu der Querschnittshöhe der Karkasse (12) nicht kleiner als 0,3 und nicht größer als 0,5 ist.

4. Schwerlast-Luftreifen nach einem der Ansprüche 1 bis 3, wobei
die Lauffläche (4) mit mindestens drei Umfangsrillen versehen ist, die in der axialen Richtung zueinander ausgerichtet sind, und unter den Umfangsrillen eine Umfangsrille, die sich an der Außenseite in der axialen Richtung befindet, eine Schulterumfangsrille ist, und
wenn ein Schnittpunkt zwischen einer Bezugslinie, die durch eine axial äußere Kante der Schulterumfangsrille verläuft und sich in der radialen Richtung erstreckt, und einer Innenfläche des Körperabschnitts als Bezugspunkt eines Abschnitts unmittelbar unterhalb der Schulterumfangsrille definiert ist,
der Körperabschnitt (42) von dem Bezugspunkt des Abschnitts unmittelbar unterhalb der Schulterumfangsrille bis zum äußeren Ende des Kernreiters eine Form aufweist, die durch einen Bogen dargestellt ist.

5. Schwerlast-Luftreifen nach Anspruch 4, wobei eine Länge von einem Ende der Laufflächenoberfläche zu der axial äußeren Kante der Schulterumfangsrille nicht kleiner als 10% und nicht größer als 25% einer Länge von einem Ende der Laufflächenoberfläche zu dem anderen Ende der Laufflächenoberfläche ist.

## Revendications

1. Bandage pneumatique pour poids lourd (2) axant un rapport d'aspect qui n'est pas supérieur à 75 %, comprenant :
une bande de roulement (4) configurée pour, au niveau d'une surface de bande de roulement de celle-ci, venir en contact avec une surface routière ;
une paire de parois latérales (6) s'étendant chacune vers l'intérieur dans une direction radiale depuis une extrémité de la bande de roulement (4) ;
une paire de talons (8) situés radialement à l'intérieur des parois latérales (6) ;
une carcasse (12) s'étendant depuis un talon (8) vers l'autre talon (8), au niveau d'un côté intérieur de la bande de roulement (4) et de la paire de parois latérales (6) ;
une ceinture (14) située entre la bande de roulement (4) et la carcasse (12) ; et
une paire de couches formant coussins (16) situées chacune entre une extrémité (54) de la ceinture (14) et la carcasse (12), dans lequel chaque talon (8) inclut une âme (34) et un sommet (36) situé radialement à l'extérieur de l'âme (34),
dans la direction radiale, une zone depuis une extrémité intérieure de chaque couche formant coussin (16) jusqu'à une extrémité extérieure du sommet (36) correspondant à celle-ci est une zone flexible, et
un rapport d'une longueur dans la direction axiale de la zone flexible sur une hauteur de section transversale de la carcasse (12) n'est pas inférieur à 0,25 et n'est pas supérieur à 0,4, dans lequel
la carcasse (12) inclut au moins une nappe de carcasse (40),
la nappe de carcasse (40) inclut : une portion formant corps (42) qui s'étend entre une âme (34) et l'autre âme (34) ; et une paire de portions retroussées (44) qui sont connectées à la portion formant corps (42) et qui sont retroussées autour des âmes (34) depuis un côté intérieur vers un côté extérieur dans une direction axiale, et
la portion formant corps (42) dans la zone flexible a une forme représentée par un arc, dans lequel
un rapport d'un rayon de l'arc représentant la forme de la portion formant corps (42) dans la zone flexible sur la hauteur de section transversale de la carcasse (12) n'est pas inférieur à 0,3 et n'est pas supérieur à 0,4.

2. Bandage pneumatique pour poids lourd selon la revendication 1, dans lequel
une distance dans la direction radiale depuis une ligne de base de talon (BBL) jusqu'à une extrémité de chaque portion retroussée (44) n'est pas inférieure à 20 mm et n'est pas supérieure à 40 mm.

3. Bandage pneumatique pour poids lourd selon l'une quelconque des revendications 1 et 2, dans lequel
un rapport d'une distance dans la direction radiale depuis une ligne de base de talon (BBL) jusqu'à une extrémité extérieure de chaque sommet (36) sur la hauteur de section transversale de la carcasse (12) n'est pas inférieur à 0,3 et n'est pas supérieur à 0,5.

4. Bandage pneumatique pour poids lourd selon l'une quelconque des revendications 1 à 3, dans lequel
la bande de roulement (4) est dotée d'au moins trois rainures circonférentielles alignées les unes avec les autres dans la direction axiale et, parmi les rainures circonférentielles, une rainure circonférentielle qui est située au niveau du côté extérieur dans la direction axiale est une rainure circonférentielle d'épaulement, et
quand une intersection entre une ligne de référence qui passe un bord axialement extérieur de la rainure circonférentielle d'épaulement et qui s'étend dans la direction radiale et une surface intérieure de la portion formant corps est définie comme un point de référence d'une portion immédiatement en dessous de la rainure circonférentielle d'épaulement,
la portion formant corps (42) depuis le point de référence de la portion immédiatement en dessous de la rainure circonférentielle d'épaulement jusqu'à l'extrémité extérieure du sommet a une forme représentée par un arc.

5. Bandage pneumatique pour poids lourd selon la revendication 4, dans lequel
une longueur depuis une extrémité de la surface de bande de roulement jusqu'à l'extrémité axialement extérieure de la rainure circonférentielle d'épaulement n'est pas inférieure à 10 % et n'est pas supérieure à 25 % d'une longueur depuis une extrémité de la surface de bande de roulement jusqu'à l'autre extrémité de la surface de bande de roulement.
